# EUROPÄISCHE PATENTANMELDUNG

(11) **EP 2 091 124 A2**
(43) Veröffentlichungstag der Anmeldung: **19.08.2009**
(21) Anmeldenummer: 09150993.5
(22) Anmeldetag: 21.01.2009
(51) Int. Cl.: H02J 7/00

(54) **Ladegerät für eine Hörvorrichtung mit einem bewegbaren Ladekontakt und zugehöriges Hörgerätesystem**

(30) Priorität: 12.02.2008 DE 102008008670
(71) Anmelder: Siemens Medical Instruments Pte. Ltd., Singapore 139959 (SG)
(72) Erfinder: Dannemann, Axel, 90766 Fürth (DE); Weigert, Roland, 91058 Erlangen (DE)
(74) Vertreter: Maier, Daniel Oliver

(57) **Zusammenfassung**

Es soll vermieden werden, dass für individuell gefertigte Hörvorrichtungen bzw. Hörgeräte individuell geformte Ladegeräte notwendig sind. Daher wird erfindungsgemäß ein Ladegerät für eine Hörvorrichtung, die mindestens einen Hörvorrichtungskontakt zur Übertragung elektrischer Energie aufweist, mit mindestens einem Ladekontakt (18, 19), der zum Laden der Hörvorrichtung mit dem Hörvorrichtungskontakt in Verbindung zu bringen ist, bereitgestellt. Das Ladegerät weist eine Positioniereinrichtung (20, 21) auf, mit der der Ladekontakt (18, 19) an eine von mehreren Stellen auf einer Trägerplatte (30) bewegbar ist. Damit kann ein Standardladegerät zur Verfügung gestellt werden, dessen Kontaktpositionen individuell eingestellt werden können.

## Beschreibung

Die vorliegende Erfindung betrifft ein Ladegerät für eine Hörvorrichtung, die mindestens einen Hörvorrichtungskontakt zur Übertragung elektrischer Energie aufweist, mit einem Ladekontakt, der zum Laden der Hörvorrichtung mit dem Hörvorrichtungskontakt in Verbindung gebracht werden kann. Unter dem Begriff Hörvorrichtung wird hier jedes am oder im Ohr tragbares, schallausgebendes Gerät verstanden, wie etwa ein Hörgerät, ein Headset, Kopfhörer und dergleichen. Die Erfindung betrifft auch ein Hörgerätesystem, das ein Ladegerät und ein Hörgerät umfasst.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

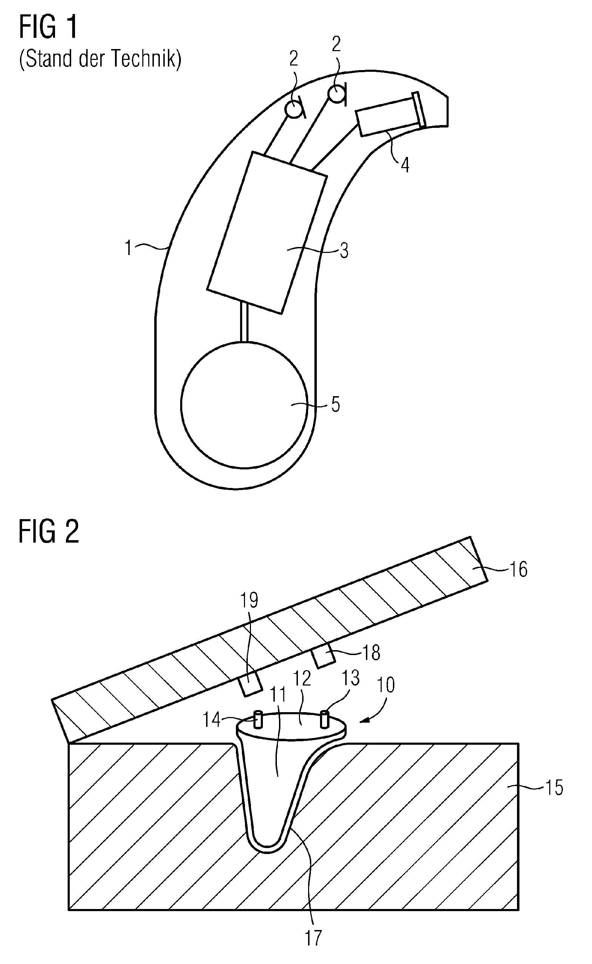

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Hörgeräte, insbesondere IdOs werden immer häufiger mit wieder aufladbaren Batterien bzw. Akkumulatoren ausgestattet. Es ist dann erforderlich, das Hörgerät im nicht getragenen Zustand zu laden. Das Laden über galvanische Kontakte besitzt gegenüber anderen Ladeverfahren den Vorteil des höheren Wirkungsgrads. Hierfür sind nun Ladekontakte an der Oberfläche des Hörgeräts vorzusehen. Da gerade IdO-Hörgeräte eine individuell geformte Hörgeräteschale besitzen, ist das Kontaktieren des Hörgeräts zum Zwecke des Ladens oftmals mit Schwierigkeiten verbunden, denn die Kontakte des Ladegeräts sind mit denjenigen des Hörgeräts exakt in Verbindung zu bringen und in dieser Position über mehrere Stunden zu halten.

In diesem Zusammenhang ist aus der Patentschrift EP 0630549 B1 eine Vorrichtung zum Wiederaufladen der Batterie eines Im-Ohr-Hörgeräts bekannt, die einen Sitz zum Aufnehmen der Prothese aufweisenden Träger umfasst. Der Sitz entspricht exakt der äußeren Form der in ihn einbringbaren Prothese. Weiterhin sind zwei leitende Anschlüsse vorgesehen, welche mit einer Quelle für elektrischen Strom verbunden sind und von der dem Sitz festlegenden Wandung des Trägers vorstehen. Nachteilig an diesem Ladegerät ist, dass es für den Hörgeräteträger individuell angefertigt werden muss, denn es müssen insbesondere die Kontakte für jedes Gerät aufgrund der individuellen Schalenform einzeln bestimmt werden. Das mit einem solchen Ladegerät zu ladende IdO-Hörgerät hat den Nachteil, dass die Ladekontakte beim Tragen des Hörgeräts direkt an der Haut liegen.

Aus der DE 10 2005 061 795 A1 ist ein Hörgerätemodul bekannt, das eine elektromechanische Schnittstelle zum mechanischen und elektrischen Ankoppeln an eine entsprechende Mehrzweckschnittstelle eines Hörgeräts umfasst.

Außerdem offenbart die DE 693 00 870 T2 eine Vorrichtung zum Nachladen eines Akkumulators eines Hörgeräts, wobei die Vorrichtung einen Träger mit einem Sitz umfasst, der gemäß der äußeren Form des in ihn einbringbaren Hörgeräts ausgebildet ist. Das Hörgerät umfasst des Weiteren leitende Flächen welche mit Kontakten der Vorrichtung zum Laden des Akkumulators in Verbindung treten können.

Die Aufgabe der vorliegenden Erfindung besteht darin, ein Ladegerät für eine Hörvorrichtung und ein Hörgerätesystem zu schaffen, die leicht an individuelle Positionen von Hörvorrichtungskontakten angepasst werden können.

Erfindungsgemäß wird diese Aufgabe gelöst durch ein Ladegerät für eine Hörvorrichtung und ein Hörgerätesystem mit Hörgerät und Ladegerät, wobei die Hörvorrichtung mindestens einen Hörvorrichtungskontakt zur Übertragung elektrischer Energie aufweist. Das Ladegerät umfasst einen ersten Ladekontakt, der zum Laden der Hörvorrichtung mit dem Hörvorrichtungskontakt in Verbindung zu bringen ist, und eine Positioniereinrichtung auf einer Trägerplatte, mit der der erste Ladekontakt an eine von mehreren Stellen der Trägerplatte bewegbar ist.

In vorteilhafter Weise ist es so möglich, ein universell einsetzbares Ladegerät beispielsweise für eine Vielzahl von Hörgeräteträgern bereitzustellen und den oder die Ladekontakte des Ladegeräts spezifisch für die individuelle Position der Hörvorrichtungskontakte mit wenigen Handgriffen einzustellen.

Vorzugsweise ist der erste Ladekontakt ein Stift, der von der Positioniereinrichtung quer zu seiner Längsachse bewegbar ist. Mit einem derartigen Stift lässt sich eine gewisse Distanz zwischen einer Ladegerätewand und der Hörvorrichtung überbrücken.

Der erste Ladekontakt kann weiterhin in einer Ebene in zwei Richtungen durch die Positioniereinrichtung bewegbar sein. Damit lässt sich der Ladekontakt auf einem gewissen zweidimensionalen Areal beliebig positionieren.

Darüber hinaus kann der erste Ladekontakt einschließlich der Positioniereinrichtung an einem Deckel des Ladegeräts angeordnet sein. Hierbei kann die Kontaktierung der zu ladenden Hörvorrichtung beim Schließen des Deckels erfolgen.

Entsprechend einer Weiterbildung ist der erste Ladekontakt mit Hilfe der Positioniereinrichtung auf einer Ladefläche eines Metallkontakts des Ladegeräts bewegbar, und beim Laden fließt ein Ladestrom von der Ladefläche in den ersten Ladekontakt. Durch diese freie Beweglichkeit des Ladekontakts auf dem Metallkontakt des Ladegeräts bedarf es keiner flexiblen Leitung für die Stromzufuhr zum Ladekontakt.

Ferner kann die Positioniereinrichtung ein erstes Schiebeelement, das in einer ersten Richtung verschiebbar und in dem der erste Ladekontakt senkrecht zu der ersten Richtung in einer zweiten Richtung bewegbar ist, sowie ein zweites Schiebeelement, das in der zweiten Richtung verschiebbar und in dem der erste Ladekontakt in der ersten Richtung bewegbar ist, aufweisen. Hierdurch lässt sich der Ladekontakt definiert in einer x- und y-Richtung verschieben.

Weiterhin kann die Positioniereinrichtung zwei senkrecht zueinander angeordnete Einstellschrauben aufweisen, mit denen der erste Ladekontakt in zwei orthogonale Richtungen bewegbar ist. Derartige Einstellschrauben haben den Vorteil, dass sie zugleich eine Fixierung in der Einstellrichtung bieten, wenn sie nicht mehr gedreht werden bzw. nur schwer gedreht werden können.

Gemäß einer weiteren bevorzugten Ausführungsform weist das Ladegerät einen zweiten Ladekontakt auf, der ebenfalls mit der Positioniereinrichtung bewegbar ist. Damit können sämtliche Kontakte, die zum Laden der Hörvorrichtung notwendig sind, individuell einzeln oder gemeinsam positioniert werden.

Besonders vorteilhaft lässt sich das erfindungsgemäße Ladegerät in einem Hörgerätesystem mit einem IdO-Hörgerät einsetzen. Bei diesem Hörgerätetyp hängt nämlich die Position der Hörgeräte- bzw. Hörvorrichtungskontakte relativ zur Hörgeräteschale nicht nur von der individuellen Form der Hörgeräteschale, sondern auch von der Position und Orientierung des Faceplates auf der Hörgeräteschale ab. Mit dem erfindungsgemäßen Ladegerät lässt sich dann jedoch rasch die individuelle Kontaktposition für die Ladekontakte des Ladegeräts einstellen.

Die vorliegende Erfindung wird nun anhand der beigefügten Zeichnungen näher erläutert, in denen zeigen
- FIG 1: ein Prinzipschaltbild eines Hörgeräts gemäß dem Stand der Technik;
- FIG 2: eine Querschnittsansicht eines erfindungsgemäßen Ladegeräts;
- FIG 3: eine Positioniereinrichtung in der Draufsicht;
- FIG 4: die Positioniereinrichtung von FIG 3 in der Seitenansicht und
- FIG 5: eine alternative Ausführungsform einer Positioniereinrichtung.

Die nachfolgend näher geschilderten Ausführungsbeispiele stellen bevorzugte Ausführungsformen der vorliegenden Erfindung dar.

Ein Ausführungsbeispiel eines Ladegeräts gemäß der vorliegenden Erfindung ist in FIG 2 im Querschnitt dargestellt. Es dient zum Aufladen eines IdO-Hörgeräts 10. Dieses IdO-Hörgerät 10 besitzt eine individuell angefertigte IdO-Schale 11, die mit einem Faceplate 12 verschlossen ist. Auf dem Faceplate 12 sind Hörgeräte-Ladekontakte 13, 14 angeordnet. Sie dienen zum Laden eines Akkumulators im Inneren des IdO-Hörgeräts 10. Da die Hörgerätekontakte 13, 14, die die oben erwähnten Hörvorrichtungskontakte darstellen, auf dem Faceplate 12 angeordnet sind, geraten sie beim Tragen des IdO-Hörgeräts 10 nicht mit der Haut des Hörgeräteträgers in Kontakt.

Das Ladegerät selbst besteht aus einem Unterteil 15 und einem Deckel 16, mit dem das Unterteil 15 verschlossen werden kann. In dem Unterteil 15 ist ein Sitz 17 eingeformt, der die individuell geformte IdO-Schale 11 gegebenenfalls passgenau aufnimmt. Der Sitz 17 bestimmt im Wesentlichen die Position der Hörgerätekontakte 13, 14, wenn das IdO-Hörgerät 10 zum Laden in das Ladegerät eingelegt ist. Weiterhin wird die Lage der Hörgerätekontakte 13, 14 auch durch die Montageposition des Faceplates 12 auf der IdO-Schale 11, aber auch durch das Faceplate 12 selbst beeinflusst. So ist die Position der Hörgerätekontakte 13, 14 stets abhängig von den Fertigungstoleranzen des Faceplates. Weiterhin bestehen größere Toleranzen hinsichtlich der rotatorischen Ausrichtung des Faceplates 12 auf der IdO-Schale 11. Wenn das Faceplate 12 nämlich gegenüber einer Standardposition etwas gedreht auf die IdO-Schale 11 aufgeklebt wird, ändern sich damit auch die Positionen der Hörgerätekontakte 13 und 14. Damit kann von vornherein nicht exakt bestimmt werden, an welcher Stelle diese beiden Kontakte 13 und 14 tatsächlich im Einzelfall angeordnet sind.

Ziel ist es daher trotz dieser Unbestimmtheit der Positionen der Hörgerätekontakte 13, 14 ein Standardladegerät bereitstellen zu können, mit dem die Hörvorrichtung bzw. das Hörgerät zuverlässig geladen werden kann. Erfindungsgemäß sind die Ladekontakte 18, 19 im Deckel 16 des Ladegeräts daher verschiebbar angeordnet. Die Position dieser Ladekontakte 18, 19 ist einmal für das individuelle Hörgerät einzustellen und kann dann unverändert bleiben. Beim Schließen des Deckels 16 kontaktieren dann die Ladekontakte 18, 19 des Ladegeräts zuverlässig die Hörgerätekontakte 13, 14.

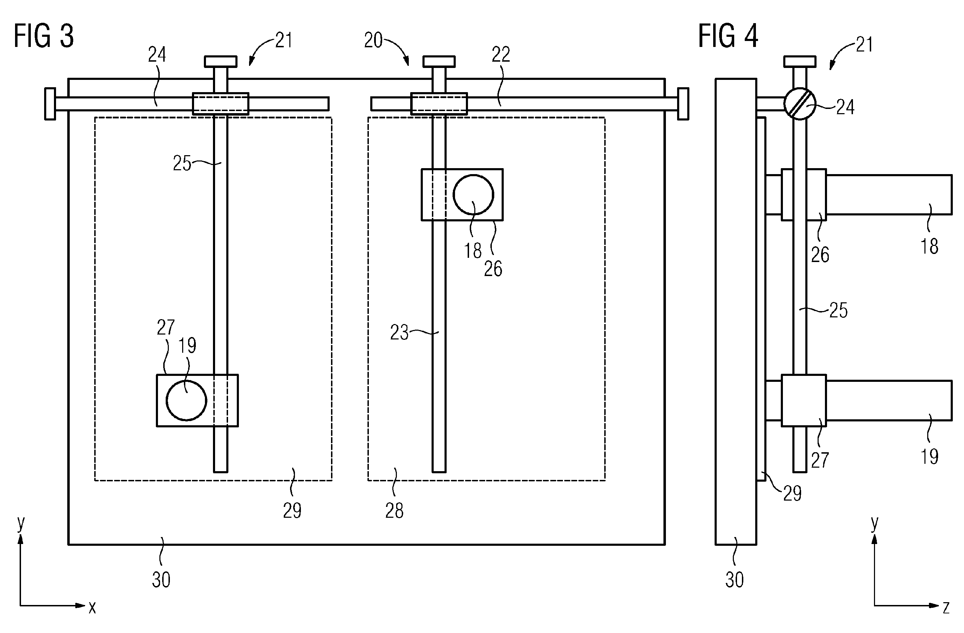

In FIG 3 ist ein erstes Ausführungsbeispiel einer Positioniereinrichtung für die Ladekontakte 18 und 19 in der Draufsicht dargestellt. Diese Positioniereinrichtung ist in den Deckel 16 integriert, der in FIG 2 der Übersicht halber nicht dargestellt ist. Sie besteht im Wesentlichen aus zwei Positioniereinheiten 20 und 21, die jeweils einen entsprechenden Ladekontakt 18, 19 bewegen und fixieren können. Jede Positioniereinheit besitzt im Wesentlichen zwei Einstellschrauben 22, 23 bzw. 24, 25 mit denen jeweils Halterungen 26 und 27 der Ladekontakte 18 und 19 in x- und y-Richtung verschoben werden können. Die Ladekontakte 18, 19 sind vorzugsweise als Federkontakte ausgebildet (federnd bezüglich z-Richtung). In der Seitenansicht von FIG 4 ist zu erkennen, dass die Ladekontakte 18 und 19 hier stiftförmig ausgebildet sind. Ihr freies Ende dient gemäß FIG 2 zur Kontaktierung der Hörgerätekontakte 13 und 14. Das dem freien Ende gegenüberliegende Ende steht mit einer jeweiligen Lade- bzw. Kontaktfläche 28, 29 in Berührung. Diese Kontaktflächen 28, 29 sind auf einer Trägerplatte 30 aufgebracht, die beispielsweise eine Wand des Deckels 16 darstellen kann. Die Kontaktflächen 28, 29 repräsentieren damit den maximalen Einstellbereich durch die Positioniereinheiten 20, 21.

Beim Ladevorgang wird Strom beispielsweise in die Kontaktfläche 28 eingeleitet, von dort durch den Ladekontakt 18 weitergeleitet an den Hörgerätekontakt 13 und schließlich in dem IdO-Hörgerät 10 weitergeleitet an den integrierten Akkumulator. Die Ladekontakte 18 und 19 sind zuvor mit Hilfe der Positioniereinheiten 20, 21 an die individuell erforderlichen Positionen gebracht worden. Damit sich die Schrauben 22 bis 25 nach dem Einstellen nicht mehr verändern, können sie gegebenenfalls mit einem Klebstoff oder anderen geeigneten Mitteln fixiert werden.

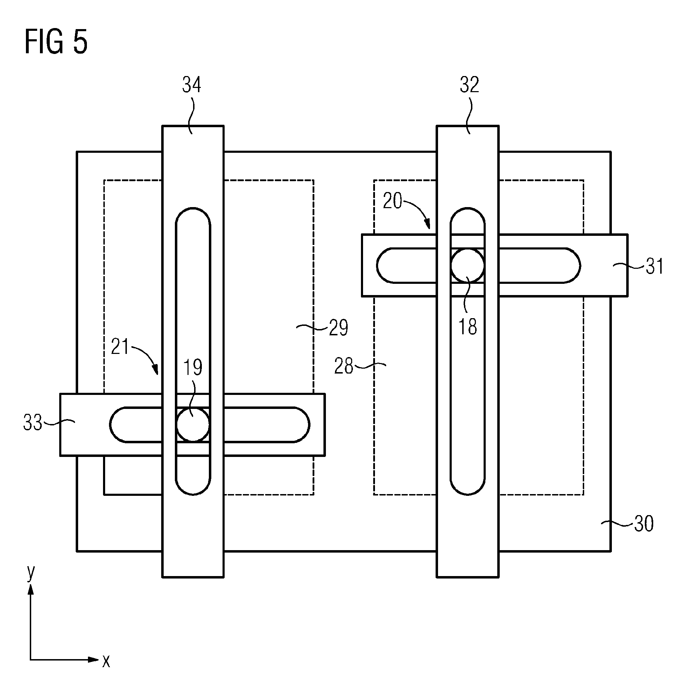

Eine alternative Ausführungsform einer Positioniereinrichtung ist in FIG 5 in der Draufsicht dargestellt. Hier befinden sich die beiden Ladekontakte 18, 19 am Kreuzungspunkt jeweils zweier orthogonal angeordneter Führungsschienen 31, 32 bzw. 33, 34. Jede Führungsschiene besitzt ein Langloch, in dem sich der jeweilige Ladekontakt in einem gewissen Bereich bewegen kann. Sie legen damit ebenfalls den Einstellbereich der Ladekontakte 18, 19 in x- und y-Richtung fest. Die Einstellbereiche entsprechen hier wiederum den Kontaktflächen 28, 29 auf der Trägerplatte 30. In der gewünschten Position sind die Führungsschienen gegen Bewegung zu sichern. Dies kann wiederum durch Klebstoff, Stifte, Klammern oder andere geeignete Mittel erfolgen. Jeweils zwei orthogonal angeordnete Führungsschienen 31, 32 bzw. 33, 34 stellen wieder eine Positioniereinheit 20 bzw. 21 dar.

Gegebenenfalls reicht es, wenn ein Ladegerät lediglich mit einem frei positionierbaren Ladekontakt ausgestattet ist. Dies kann beispielsweise dann der Fall sein, wenn einer der Hörgerätekontakte ausreichend groß ist. Das Ladegerät kann aber auch mit mehr als zwei Positioniereinheiten 20, 21 ausgestattet sein, um gegebenenfalls weitere Kontakte zum Hörgerät beispielsweise für Signalübertragungen herzustellen. In jedem Fall ist es dadurch möglich, dass ein Standardladegerät, dessen Ladekontaktpositionen nicht festgelegt sind, auch zum Laden individuell geformter Hörvorrichtungen bzw. Hörgeräte verwendet wird.

## Patentansprüche

1. Ladegerät für eine Hörvorrichtung (10), die mindestens einen Hörvorrichtungskontakt (13, 14) zur Übertragung elektrischer Energie aufweist, mit
- einem ersten Ladekontakt (18, 19), der zum Laden der Hörvorrichtung (10) mit dem Hörvorrichtungskontakt (13, 14) in Verbindung zu bringen ist,
**gekennzeichnet durch**
- eine auf einer Trägerplatte (30) angeordnete Positioniereinrichtung (20, 21), mit der der erste Ladekontakt (18, 19) auf der Trägerplatte (30) an eine von mehreren Stellen bewegbar ist.

2. Ladegerät nach Anspruch 1, wobei der erste Ladekontakt (18, 19) ein Stift ist, der von der Positioniereinrichtung (20, 21) quer zu seiner Längsachse bewegbar ist.

3. Ladegerät nach Anspruch 1 oder 2, wobei der erste Ladekontakt (18, 19) in einer Ebene in zwei Richtungen durch die Positioniereinrichtung (20, 21) bewegbar ist.

4. Ladegerät nach einem der vorhergehenden Ansprüche, wobei der erste Ladekontakt (18, 19) einschließlich der Positioniereinrichtung (20, 21) an einem Deckel (16) des Ladegeräts angeordnet ist.

5. Ladegerät nach einem der vorhergehenden Ansprüche, wobei der erste Ladekontakt (18, 19) mit Hilfe der Positioniereinrichtung (20, 21) auf einer Ladefläche (28, 29) eines Metallkontakts des Ladegeräts bewegbar ist, und beim Laden ein Ladestrom von der Ladefläche (28, 29) in den ersten Ladekontakt (18, 19) fließt.

6. Ladegerät nach einem der vorhergehenden Ansprüche, wobei die Positioniereinrichtung (20, 21) ein erstes Schiebeelement (31, 33), das in einer ersten Richtung verschiebbar und in dem der erste Ladekontakt (18, 19) senkrecht zu der ersten Richtung in einer zweiten Richtung bewegbar ist, sowie ein zweites Schiebeelement (32, 34), das in der zweiten Richtung verschiebbar und in dem der erste Ladekontakt (18, 19) in der ersten Richtung bewegbar ist, aufweist.

7. Ladegerät nach einem der vorhergehenden Ansprüche, wobei die Positioniereinrichtung (20, 21) zwei senkrecht zueinander angeordnete Einstellschrauben (22, 23, 24, 25) aufweist, mit denen der erste Ladekontakt (18, 19) in zwei orthogonale Richtungen bewegbar ist.

8. Ladegerät nach einem der vorhergehenden Ansprüche, das einen zweiten Ladekontakt aufweist, der ebenfalls mit der Positioniereinrichtung (20, 21) bewegbar ist.

9. Hörgerätesystem mit einem IdO-Hörgerät, das zwei Hörgerätekontakte im Faceplate aufweist, und einem Ladegerät nach Anspruch 8, mit dessen beiden Ladekontakten das IdO-Hörgerät ladbar ist.
